# EUROPÄISCHE PATENTANMELDUNG

(11) **EP 2 624 213 A1**
(43) Veröffentlichungstag der Anmeldung: **07.08.2013**
(21) Anmeldenummer: 12007292.1
(22) Anmeldetag: 24.10.2012
(51) Int. Cl.: G06T 11/00, G08G 1/16

(54) **Verfahren zur Visualisierung des Umfelds eines Kraftfahrzeugs**

(30) Priorität: 04.02.2012 DE 102012002149
(71) Anmelder: AUDI AG, 85045 Ingolstadt (DE)
(72) Erfinder: Heinemann, Patrick, 85092 Kösching (DE)
(74) Vertreter: Thielmann, Frank

(57) **Zusammenfassung**

Verfahren zur Visualisierung des Umfelds eines Kraftfahrzeugs, bei dem das Umfeld mittels einer Kamera aufgenommen und das Kamerabild auf einem Display dargestellt wird, wobei auf dem Kamerabild ein anderer erfasster Verkehrsteilnehmer, insbesondere ein anderes erfasstes Fahrzeug, mit einer Umrahmung versehen dargestellt wird.

## Beschreibung

Die Erfindung betrifft ein Verfahren zur Visualisierung des Umfelds eines Kraftfahrzeugs, bei dem das Umfeld mittels einer Kamera aufgenommen und das Kamerabild auf einem Display dargestellt wird.

Von verschiedenen Herstellern wurden bereits Fahrzeugprototypen vorgestellt, bei denen ein konventioneller Außenrückspiegel oder ein Innenrückspiegel durch ein Kamera-Monitor-System ersetzt worden ist. Dazu wird eine Kamera an die Stelle des Spiegels gesetzt, die das rückwärtige Umfeld des Fahrzeugs aufnimmt. Auf einer Anzeige (Display) im Innenraum des Fahrzeugs wird das von der Kamera aufgenommene Kamerabild angezeigt.

In der Druckschrift DE 10 2008 036 579 A1 wird vorgeschlagen Umfeldinformationen, beispielsweise Kamerabilder, auf einer Anzeigeeinheit im Innenrückspiegel eines Kraftfahrzeugs anzuzeigen. Dazu werden von der Kamera aufgenommene Daten einer Bildverarbeitung unterzogen, so dass beispielsweise erkannte Verkehrszeichen oder Geschwindigkeitsbegrenzungen angezeigt werden können.

In der DE 198 45 567 A1 wird ein Verfahren zur Visualisierung des Rückraums eines Fahrzeugs beschrieben, um das Rangieren oder Rückwärtsfahren zu erleichtern. Bei diesem Verfahren wird ein Kamerabild einer Rückfahrkamera von Hilfslinien oder Hilfszeichen überlagert, durch die der prädiktive Fahrweg angezeigt oder dargestellt wird.

Aus der EP 1 642 770 A2 ist ein Verfahren zur Lenkung der Aufmerksamkeit eines Fahrers eines Fahrzeugs auf Objekte in einem Bild bekannt. Dazu werden Bildbestandteile, die als relevant erkannte Objekte enthalten, hervorgehoben dargestellt. Beispielsweise können Bildbestandteile erhellt oder mit veränderten Farben dargestellt werden. Beispiele für derartige als relevant erkannte Objekte sind andere Verkehrsteilnehmer, insbesondere andere Kraftfahrzeuge.

In ähnlicher Weise wird in der WO 2007/107259 A1 vorgeschlagen, interessierende Objekte in einem Kamerabild mittels einer Bildverarbeitung zu erkennen und so zu manipulieren, dass sie schneller und einfacher wahrgenommen werden können. Beispielsweise können derartige Objekte mit geänderter Helligkeit oder geänderter Farbe angezeigt werden.

Bei einem aus der EP 1 315 639 B1 bekannten Innenspiegel für ein Kraftfahrzeug ist vorgesehen, dass mittels einer Sensorik Zusatzinformationen, beispielsweise die Geschwindigkeit eines nachfolgenden Fahrzeugs, erfasst werden, die in das Spiegelbild eingeblendet werden. Dadurch wird dem Fahrer eine Geschwindigkeitsangabe angezeigt, die er dem dargestellten nachfolgenden Fahrzeug zuordnen kann.

Der Erfindung liegt die Aufgabe zugrunde, ein Verfahren zur Visualisierung des Umfelds eines Kraftfahrzeugs anzugeben, durch das der Fahrer besser unterstützt wird, so dass die Erkennung anderer Verkehrsteilnehmer vereinfacht wird.

Zur Lösung dieser Aufgabe ist bei einem Verfahren der eingangs genannten Art erfindungsgemäß vorgesehen, dass auf dem Kamerabild ein anderer erfasster Verkehrsteilnehmer, insbesondere ein anderes erfasstes Fahrzeug, mit einer Umrahmung versehen dargestellt wird.

Der Erfindung liegt die Erkenntnis zugrunde, dass die Interpretation von Kamerabildern häufig schwierig ist, da ein typisches Kamerabild eine Vielzahl von Einzelinformationen enthält, die vom Betrachter schnell verarbeitet werden müssen. Dazu zählen unterschiedliche Umfeldmerkmale, die eine schnelle Erfassung anderer Verkehrsteilnehmer häufig erschweren. In Abhängigkeit der Lichtverhältnisse kann es auch schwierig sein, Fahrzeuge mit bestimmten Farben rechtzeitig zu erkennen. Erschwerend kommt hinzu, dass die Geschwindigkeit bzw. die Relativgeschwindigkeit anderer Verkehrsteilnehmer durch einen einmaligen Blick überhaupt nicht erfasst werden kann. Durch die erfindungsgemäß vorgesehene Umrahmung anderer Verkehrsteilnehmer können hingegen relevante Objekte wie Personen oder andere Fahrzeuge eindeutig gekennzeichnet werden, so dass der Fahrer weiß, dass er seine Aufmerksamkeit darauf richten muss. Eine derartige Umrahmung wird besonders schnell erkannt, da in einem gewöhnlichen Kamerabild keine derartigen Rahmen sichtbar sind. Das Einblenden einer Umrahmung ist daher ein besonders effektives Mittel, um die Aufmerksamkeit eines Benutzers auf sich zu ziehen.

Das erfindungsgemäße Verfahren kann vorsehen, dass das Kamerabild einer Bildverarbeitung unterzogen wird, um ein Fahrzeug oder eine Fahrzeugkontur zu extrahieren. Auf diese Weise können relevante Objekte wie Fahrzeuge oder andere Personen, die für die Verkehrssicherheit relevant sind, von nicht relevanten Objekten wie Umfeldmerkmalen unterschieden werden. Derartige Bildverarbeitungsalgorithmen laufen in Echtzeit ab, so dass ein aufgenommenes Kamerabild unmittelbar nach der Bildverarbeitung angezeigt wird, wobei gegebenenfalls ein oder mehrere Verkehrsteilnehmer mit einer Umrandung versehen dargestellt werden.

Eine Weiterbildung des erfindungsgemäßen Verfahrens sieht vor, dass für Fahrzeuge mit unterschiedlicher Relativgeschwindigkeit verschiedenfarbige Umrahmungen verwendet werden. Durch die unterschiedliche Farbwahl kann die Relativgeschwindigkeit zwischen dem eigenen Fahrzeug und dem anderen Fahrzeug als zusätzliche Information angezeigt werden. Der Fahrer erkennt somit auf einen Blick anhand der Farbe der Umrahmung, ob es sich bei dem anderen Verkehrsteilnehmer um ein Fahrzeug mit einer kritischen Relativgeschwindigkeit handelt oder nicht. Durch die farbige Darstellung der Umrahmung erhöht sich somit der Informationsgehalt des dargestellten Kamerabilds für den Benutzer.

Es liegt auch im Rahmen der Erfindung, dass die Relativgeschwindigkeit und/oder der Abstand zu einem erfassten Fahrzeug eingeblendet wird. Diese Informationen ermöglichen es dem Fahrer, das andere erfasste Fahrzeug besser einzuschätzen.

Zusätzlich können auf dem Display von einem Fahrerassistenzsystem gelieferte Informationen oder Warnungen eingeblendet werden. Dazu zählen Spurwechselwarnungen und dergleichen, die auf diese Weise gemeinsam mit dem Kamerabild wahrgenommen werden können. Ebenso kann ein Warnhinweis eines Einsatzfahrzeugs eingeblendet werden. Bei dem erfindungsgemäßen Verfahren kann es vorgesehen sein, dass ein Innenrückspiegel und/oder ein Außenrückspiegel des Kraftfahrzeugs als Display verwendet wird. Alternativ oder zusätzlich kann auch ein im Fahrzeuginnenraum angeordnetes Display zum Anzeigen des Kamerabilds verwendet werden. Gegebenenfalls kann situationsabhängig ein anderes Display verwendet werden. Beispielsweise kann bei einem fahrenden Fahrzeug der Innenrückspiegel als Display verwendet werden, beim Einparken oder Rückwärtsfahren kann zusätzlich der Innenrückspiegel oder ein Display im Fahrzeuginnenraum verwendet werden.

Ebenso kann ein Warnhinweis in Form eines Verkehrszeichens oder eines Icons in dem Kamerabild eingeblendet werden.

Daneben betrifft die Erfindung ein Kraftfahrzeug, mit einer Kamera zum Aufnehmen des Umfelds des Kraftfahrzeugs und einem Display zum Darstellen des aufgenommenen Kamerabilds.

Das erfindungsgemäße Kraftfahrzeug zeichnet sich dadurch aus, dass es zur Durchführung des beschriebenen Verfahrens und zum Darstellen eines anderen erfassten Verkehrsteilnehmers, insbesondere eines anderen erfassten Fahrzeugs, das auf dem Kamerabild mit einer Umrahmung versehen worden ist, ausgebildet ist.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: eine Verkehrssituation bei der Durchführung des erfindungsgemäßen Verfahrens; und
- Fig. 2: das während der Verkehrssituation von Fig. 1 auf einem Display dargestellte Kamerabild.

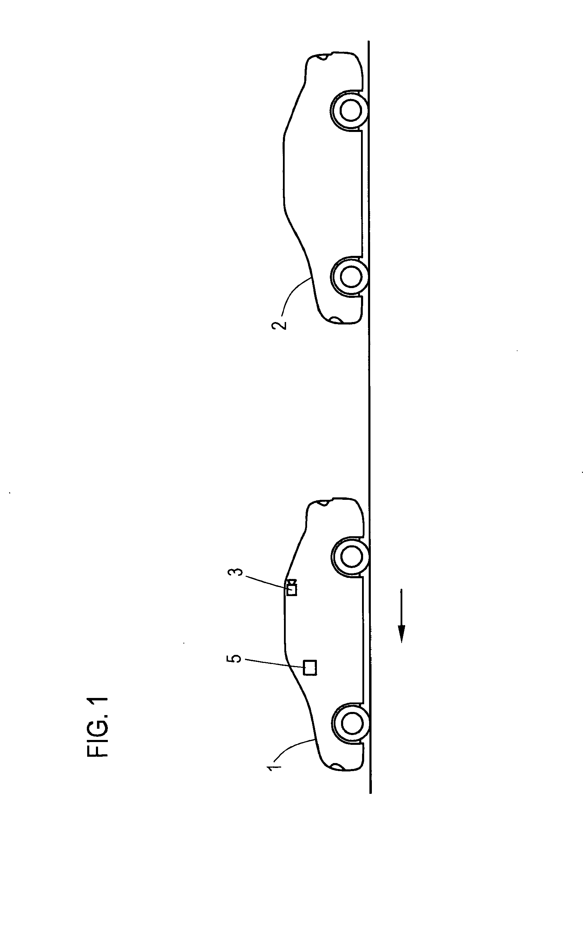

Fig. 1 zeigt ein erstes Fahrzeug 1 und ein zweites Fahrzeug 2, die sich in Pfeilrichtung bewegen. Das erste Fahrzeug 1 weist eine Kamera 3 auf, mit der das Umfeld des Fahrzeugs 1 aufgenommen wird. Die Kamera 3 ist so angebracht, dass in dem dargestellten Ausführungsbeispiel das rückwärtige Umfeld erfasst wird, dementsprechend befindet sich das zweite Fahrzeug 2 auf dem Kamerabild.

Das von der Kamera 3 aufgenommene Kamerabild wird einer Bildverarbeitung unterzogen, um andere Verkehrsteilnehmer zu identifizieren. Ein Bildverarbeitungsalgorithmus ist dafür vorgesehen, ein anderes Fahrzeug oder Personen in dem Kamerabild zu identifizieren. Fahrzeuge werden anhand ihres Umrisses oder anhand charakteristischer Merkmale wie Scheinwerfer oder anhand eines Bewegungsprofils ermittelt, indem eine Sequenz von Fahrzeugbildern aufgewertet wird.

Durch diese Bildauswertung kann rechnerisch die Relativgeschwindigkeit anderer Verkehrsteilnehmer, insbesondere die Relativgeschwindigkeit nachfolgender Fahrzeuge, ermittelt werden.

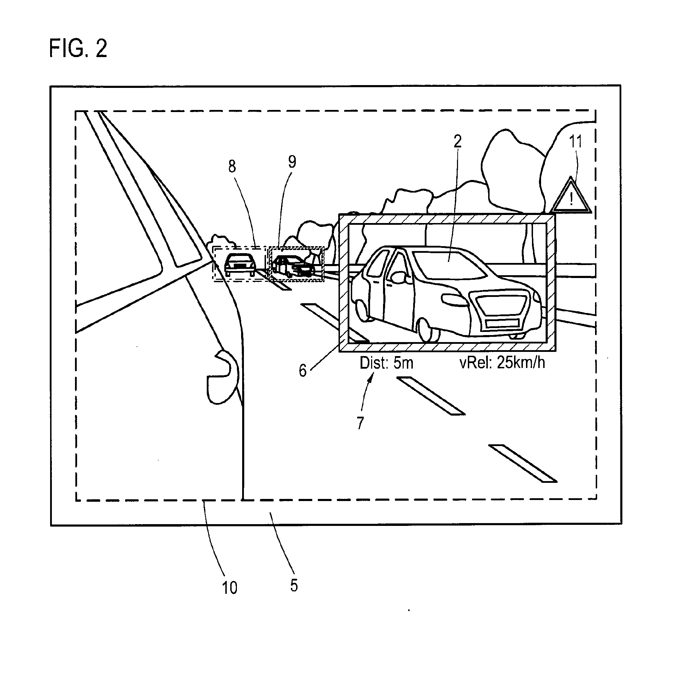

In dem ersten Fahrzeug 1 ist ein schematisch dargestelltes Display (Anzeige) 5 vorhanden, auf der das Kamerabild, das der Bildverarbeitung unterzogen wurde, dargestellt wird. Fig. 2 zeigt schematisch das Display 5 mit dem Kamerabild. Das nachfolgende Fahrzeug 2 ist mit einer Umrahmung 6 versehen, die eine bestimmte Farbe aufweist. In dem dargestellten Ausführungsbeispiel wird die Umrahmung 6 in rot dargestellt, die Farbe wurde in Fig. 2 durch eine Schraffur ersetzt.

Die für die Umrahmung verwendete Farbe entspricht einer bestimmten Relativgeschwindigkeit, d. h. Fahrzeuge, die sich schneller als das Fahrzeug 1 bewegen, werden mit einer andersfarbigen Umrahmung dargestellt als Fahrzeuge, die sich langsamer als das Fahrzeug 1 bewegen.

In dem dargestellten Ausführungsbeispiel wird die Farbe rot verwendet, wenn sich das andere (zweite) Fahrzeug 2 im toten Winkel befindet. In Fig. 2 erkennt man, dass der Abstand und die Relativgeschwindigkeit des zweiten Fahrzeugs 2 als Zusatzinformation 7 unterhalb der Umrahmung 6 angezeigt werden. Darüber hinaus wird auf dem Display 5 ein weiteres Fahrzeug mit einer grünen Umrahmung 8 dargestellt, die grüne Umrahmung wird für Fahrzeuge verwendet, die aus Gründen der Verkehrssicherheit nicht relevant sind, d. h. Fahrzeuge, die sich langsamer als das eigene Fahrzeug fortbewegen. Zusätzlich ist ein Fahrzeug mit einer gelben Umrahmung 9 dargestellt, gelbe Farbe wird als Umrahmung für solche Fahrzeuge verwendet, deren Relativgeschwindigkeit relevant ist. Dazu zählen Fahrzeuge, die eine höhere Relativgeschwindigkeit als das eigene Fahrzeug 1 besitzen, so dass sie sich langsam nähern. In Fig. 2 wurden die farbigen Umrahmungen durch unterschiedliche Schraffuren ersetzt. Die Umrahmungen 8, 9 sind ebenso wie die Umrahmung 6 mit zusätzlichen Informationen versehen, die Aufschluss über den Abstand und die Relativgeschwindigkeit geben. Durch die farbige Darstellung der Umrahmungen kann der Benutzer unmittelbar erkennen, ob ein anderer Verkehrsteilnehmer eine Gefahr darstellt. Er kann dadurch andere Fahrzeuge besser einschätzen, wodurch die Gefahr einer gefährlichen Situation verringert wird.

Das in Fig. 2 gezeigte auf dem Display 5 dargestellte Kamerabild ist von einer roten Umrahmung 10 umgeben, die in Fig. 2 als gestrichelte Linie dargestellt ist. Anhand der roten Farbe erkennt der Fahrer, dass das dargestellte Kamerabild einen Warnhinweis im Sinne einer "Gesamtwarnstufe" enthält. Anderenfalls, falls das dargestellte Kamerabild lediglich Fahrzeuge mit gelber oder grüner Umrahmung aufweist, entfällt die rote Umrahmung 10, bzw. diese wird durch eine Umrahmung in gelber oder grüner Farbe ersetzt.

In Fig. 2 erkennt man, dass im Bereich der rechten oberen Ecke der roten Umrahmung 6 ein Verkehrszeichen 11 in Form eines Icons dargestellt ist. Dieses Verkehrszeichen 11 wird vom Fahrer als Warnhinweis wahrgenommen, so dass er eine bestehende Gefahr oder eine drohende gefährliche Situation besonders schnell erkennen kann.

## Patentansprüche

1. Verfahren zur Visualisierung des Umfelds eines Kraftfahrzeugs, bei dem das Umfeld mittels einer Kamera aufgenommen und das Kamerabild auf einem Display dargestellt wird, wobei auf dem Kamerabild ein anderer erfasster Verkehrsteilnehmer, insbesondere ein anderes erfasstes Fahrzeug, mit einer Umrahmung versehen dargestellt wird, **dadurch gekennzeichnet,**
**dass** für Fahrzeuge mit unterschiedlicher Relativgeschwindigkeit verschiedenfarbige Umrahmungen verwendet werden, wobei die Farbgebung der Umrahmung angibt, ob es sich bei dem erfassten Fahrzeug um ein Fahrzeug mit einer kritischen Relativgeschwindigkeit handelt oder nicht.

2. Verfahren nach Anspruch 1,
**dadurch gekennzeichnet,**
**dass** das Kamerabild einer Bildverarbeitung unterzogen wird, um ein Fahrzeug oder eine Fahrzeugkontur zu extrahieren.

3. Verfahren nach Anspruch 1 oder 2,
**dadurch gekennzeichnet,**
**dass** für Fahrzeuge mit einer kritischen Relativgeschwindigkeit die Umrahmung in roter Farbe, für Fahrzeuge, die aus Gründen der Verkehrssicherheit nicht relevant sind, die Umrahmung in grüner Farbe und für Fahrzeuge mit relevanter Relativgeschwindigkeit die Umrahmung in gelber Farbe angezeigt wird .

4. Verfahren nach einem der vorangehenden Ansprüche,
**dadurch gekennzeichnet,**
**dass** für Fahrzeuge unterschiedlichen Typs verschiedenfarbige Umrahmungen verwendet werden.

5. Verfahren nach einem der vorangehenden Ansprüche,
**dadurch gekennzeichnet,**
**dass** die Relativgeschwindigkeit und/oder der Abstand zu einem erfassten Fahrzeug eingeblendet wird.

6. Verfahren nach einem der vorangehenden Ansprüche,
**dadurch gekennzeichnet,**
**dass** eine von einem Fahrerassistenzsystem gelieferte Spurwechselwarnung auf dem Display eingeblendet wird.

7. Verfahren nach einem der vorangehenden Ansprüche,
**dadurch gekennzeichnet,**
**dass** ein Warnhinweis eines Einsatzfahrzeugs in dem Kamerabild eingeblendet wird.

8. Verfahren nach einem der vorangehenden Ansprüche,
**dadurch gekennzeichnet,**
**dass** ein Innenrückspiegel und/oder ein Außenrückspiegel des Kraftfahrzeugs als Display verwendet wird.

9. Verfahren nach einem der vorangehenden Ansprüche,
**dadurch gekennzeichnet,**
**dass** ein Warnhinweis in Form eines Verkehrszeichens (11) oder eines Icons in dem Kamerabild eingeblendet wird.

10. Kraftfahrzeug, mit einer Kamera zum Aufnehmen des Umfelds des Kraftfahrzeugs und einem Display zum Darstellen des aufgenommenen Kamerabilds,
**dadurch gekennzeichnet,**
**dass** es zur Durchführung des Verfahrens nach einem der Ansprüche 1 bis 9 und zum Darstellen eines anderen erfassten Verkehrsteilnehmers, insbesondere eines anderen erfassten Fahrzeugs, das auf dem Kamerabild mit einer Umrahmung versehen worden ist, ausgebildet ist.
